# EUROPÄISCHE PATENTSCHRIFT

(11) **EP 3 238 328 B1**
(45) Veröffentlichungstag und Bekanntmachung des Hinweises auf die Patenterteilung: **12.02.2020**
(21) Anmeldenummer: 15819790.5
(22) Anmeldetag: 19.12.2015
(51) Int. Cl.: H02K 16/00, B60K 7/00, B60L 50/50, H02K 11/33, H02K 5/22

(54) **ELEKTRONIKBAUEINHEIT FÜR EINEN ELEKTROMOTOR EINES EINZELRADANTRIEBS EINES KRAFTFAHRZEUGS, EINZELRADANTRIEB SOWIE KRAFTFAHRZEUG**
ELECTRONIC COMPONENT FOR AN ELECTRIC MOTOR OF AN INDIVIDUAL WHEEL DRIVE OF A MOTOR VEHICLE, INDIVIDUAL WHEEL DRIVE, AND MOTOR VEHICLE
MODULE ÉLECTRONIQUE POUR UN MOTEUR ÉLECTRIQUE D'UN ENTRAÎNEMENT DE ROUE INDIVIDUELLE D'UN VÉHICULE À MOTEUR, ENTRAÎNEMENT DE ROUE INDIVIDUELLE ET VÉHICULE À MOTEUR

(30) Priorität: 22.12.2014 DE 102014019433
(43) Veröffentlichungstag der Anmeldung: 01.11.2017
(73) Patentinhaber: Audi AG, 85045 Ingolstadt (DE)
(72) Erfinder: ALBL, Sebastian, 85080 Gaimersheim (DE); RUSCH, Josef, 85098 Grossmehring (DE); SCHULZ, Stefan, 85748 Garching (DE); KNÖFERL, Benjamin, 85113 Böhmfeld (DE)
(86) Internationale Anmeldenummer: PCT/EP2015/002569
(87) Internationale Veröffentlichungsnummer: WO 2016/102057

(56) Entgegenhaltungen:
- EP-A2- 0 951 131
- EP-A2- 0 951 131
- EP-A2- 2 323 243
- EP-A2- 2 323 243
- DE-A1-102011 001 483
- DE-A1-102011 001 483

## Beschreibung

Die Erfindung betrifft einen Einzelradantrieb zum Antreiben eines einer Achse eines Kraftfahrzeugs zugeordneten Rads, mit einem Elektromotor und einer Elektronikbaueinheit, die über ein an einem Motorgehäuse des Elektromotors befestigtes Elektronikgehäuse sowie eine elektrische Steckverbindungseinrichtung zur Herstellung einer lösbaren elektrischen Verbindung verfügt. Die Erfindung betrifft weiterhin ein Kraftfahrzeug.

Die Elektronikbaueinheit ist vorzugsweise dem Elektromotor des Einzelradantriebs zugeordnet. Der Einzelradantrieb dient dem Antreiben eines Rads, insbesondere eines einzigen Rads des Kraftfahrzeugs. Beispielsweise weist das Kraftfahrzeug mindestens eine angetriebene Achse auf, die über mehrere, üblicherweise zwei, Räder verfügt. Jedem Rad der angetriebenen Achse ist nun ein Einzelradantrieb zugeordnet, sodass das Rad mittels des Einzelradantriebs antreibbar ist. Entsprechend ist jedem Rad der angetriebenen Achse ein separater Elektromotor mit einer separaten Elektronikbaueinheit zugeordnet.

Mithilfe des Einzelradantriebs kann das Rad, welchem der Einzelradantrieb zugeordnet ist, unabhängig von anderen Rädern des Kraftfahrzeugs beziehungsweise der angetriebenen Achse angetrieben werden. Der Elektromotor ist zu diesem Zweck mit dem Rad wirkverbunden, insbesondere starr und/oder permanent. Die Elektronikbaueinheit dient dem Betreiben des Elektromotors. Insbesondere umfasst die Elektronikbaueinheit eine Leistungselektronik, mittels welcher dem Elektromotor elektrische Energie zugeführt werden kann.

Beispielsweise ist die Leistungselektronik als Wechselrichter ausgestaltet oder weist zumindest einen solchen auf, wobei der Wechselrichter einen Gleichstrom eines Bordnetzes des Kraftfahrzeugs in einen Wechselstrom beziehungsweise einen Drehstrom umsetzt, der anschließend dem Elektromotor zugeführt wird. Während das Bordnetz insoweit lediglich eine Phase sowie einen Nullleiter aufweist, verfügt der Elektromotor über mehrere Phasen, insbesondere genau drei Phasen. Zusätzlich kann der Nullleiter vorgesehen sein. Unter dem Bordnetz ist insbesondere ein Hochvoltbordnetz zu verstehen. Dieses kann zusätzlich zu einem weiteren Bordnetz, insbesondere einem Niedervoltbordnetz, vorliegen. Das Hochvoltbordnetz zeichnet sich im Vergleich zu dem Niedervoltbordnetz durch eine höhere Spannung aus. Während für das Niedervoltbordnetz beispielsweise 12 V verwendet werden, weist das Hochvoltbordnetz bevorzugt eine höhere Spannung, insbesondere mindestens 18 V, mindestens 24 V, mindestens 36 V, mindestens 48 V oder mindestens 60 V, auf. Auch höhere Spannungen können für das Hochvoltbordnetz vorgesehen sein, beispielsweise mindestens 250 V, mindestens 450 V oder mindestens 800 V.

Die Elektronikbaueinheit verfügt über das Elektronikgehäuse, in welchem beispielsweise die Leistungselektronik angeordnet ist. Zudem verfügt die Elektronikbaueinheit über die elektrische Steckverbindungseinrichtung, mittels welcher die lösbare elektrische Verbindung hergestellt werden kann. Diese Verbindung liegt vorzugsweise zwischen dem Bordnetz und der Elektronikbaueinheit, insbesondere der Leistungselektronik, vor. Das Elektronikgehäuse ist an dem Motorgehäuse des Elektromotors befestigbar beziehungsweise befestigt. Zu diesem Zweck können sowohl das Elektronikgehäuse als auch das Motorgehäuse einen entsprechenden Anschlussflansch aufweisen, wobei der Anschlussflansch des Elektronikgehäuses an dem Anschlussflansch des Motorgehäuses befestigt werden kann beziehungsweise befestigt ist.

Zudem ist die Elektronikbaueinheit unmittelbar elektrisch mit dem Elektromotor verbunden. Insbesondere ist die Leistungselektronik elektrisch an Phasenanschlüsse des Elektromotors angeschlossen. Dies hat den Vorteil, dass die Phasenleitungen, über welche dieser Anschluss vorliegt, lediglich zwischen der Elektronikbaueinheit und dem Elektromotor vorliegen und nicht durch weitere Bereiche des Kraftfahrzeugs verlaufen. Beispielsweise durchgreifen die Phasenleitungen den Anschlussflansch des Elektronikgehäuses und/oder den Anschlussflansch des Motorgehäuses. Auf diese Art und Weise ist die kürzest mögliche elektrische Verbindung zwischen der Elektronikbaueinheit und dem Elektromotor realisiert.

Aus dem Stand der Technik ist beispielsweise die Druckschrift EP 2 323 243 A2 bekannt. Diese betrifft ein Leistungsmodul, in dem ein Motor und eine Motorantriebseinheit effizient konfiguriert sind. Das Leistungsmodul umfasst ein Leistungsmodulgehäuse, das eine externe Form bildet, einen Wechselrichter, der in dem Leistungsmodulgehäuse vorgesehen und konfiguriert ist, um einen Gleichstrom in einen Wechselstrom umzuwandeln; einen Wechselstromleistungsleiter, der in dem Leistungsmodulgehäuse vorgesehen ist und mit dem Wechselrichter verbunden ist, um zu bewirken, dass der durch den Wechselrichter umgewandelte Wechselstrom dadurch fließt; und einen Motor, der in dem Leistungsmodulgehäuse vorgesehen und mit dem Wechselstromleiter verbunden ist, um den Wechselstrom aufzunehmen und eine Drehkraft zu erzeugen.

Weiterhin beschreibt die Druckschrift DE 10 2011 001 483 A1 ein nachrüstbares elektrisches Antriebsstrangmodul für ein Kraftfahrzeug, mit zwei nebeneinander angeordneten Motoreinheiten, jeweils umfassend mindestens einen Elektromotor, wobei jede Motoreinheit über jeweils eine als Gelenkwelle ausgebildete Welle mit einem anzutreibenden Rad wirkverbindbar ist und wobei zwischen jeder Motoreinheit und der zugehörigen Welle ein Übersetzungsgetriebe angeordnet ist, und wobei die Motoreinheiten an einer Tragstruktur festgelegt sind, die an der Kraftfahrzeugkarosserie festlegbar ist. Dabei soll ein Fluid-Kühler für die Steuerung vorgesehen sein.

Es ist nun Aufgabe der Erfindung, einen Einzelradantrieb zum Antreiben eines einer Achse eines Kraftfahrzeugs zugeordneten Rads vorzuschlagen, welcher gegenüber anderen Einzelradantrieben Vorteile aufweist, insbesondere eine flexible Handhabung und/oder eine geringere Teileanzahl ermöglicht.

Dies wird erfindungsgemäß mit einem Einzelradantrieb mit den Merkmalen des Anspruchs 1 erreicht. Dabei ist vorgesehen, dass die Steckverbindungseinrichtung an einem von dem Elektronikgehäuse ausgehenden Vorsprung angeordnet ist, der im Querschnitt gesehen auf Höhe einer Drehachse des Elektromotors angeordnet ist. Die Steckverbindungseinrichtung ist insoweit nicht unmittelbar an dem Elektronikgehäuse vorgesehen, sondern an dem Vorsprung, welcher von dem Elektronikgehäuse ausgeht beziehungsweise über dieses übersteht. Die Steckverbindungseinrichtung kann entweder als elektrische Steckeraufnahme oder als elektrischer Stecker ausgestaltet sein oder genau einen oder mehrere Steckverbinder aufweisen, wobei der Steckverbinder beziehungsweise jeder der Steckverbinder wiederum als Steckeraufnahme oder als Stecker ausgebildet ist. Die Steckeraufnahme ist dabei zur wenigstens bereichsweisen Aufnahme eines Steckers ausgebildet, wobei die elektrische Verbindung hergestellt ist, sobald der Stecker zumindest bereichsweise in der Steckeraufnahme vorliegt.

Die Anordnung der Steckverbindungseinrichtung an dem Vorsprung hat den Vorteil, dass eine äußerst flexible Anordnung realisiert werden kann. Insbesondere ist es bei entsprechender Anordnung des Vorsprungs an dem Elektronikgehäuse möglich, die Elektronikbaueinheit für mehrere, vorzugsweise derselben Achse des Kraftfahrzeugs zugeordnete, Einzelradantriebe heranzuziehen und dabei die Konfiguration der elektrischen Steckverbindungseinrichtung beizubehalten. Dabei ist vor allem darauf zu achten, dass eine über die Steckverbindungseinrichtung mit der Elektronikbaueinheit elektrisch verbundene Leitung zwischen Grenzflächen angeordnet werden kann, die einerseits von einem Karosserieblech, beispielsweise einem Karosserieblech des Unterbodens des Kraftfahrzeugs, und andererseits von einem Boden beziehungsweise Untergrund, auf welchem das Kraftfahrzeug sich bewegt, definiert werden.

Weitere Grenzflächen werden von dem Elektromotor selbst beziehungsweise dem Motorgehäuse und/oder dem mittels des Elektromotors angetriebenen Rad definiert. Insbesondere ist es bei geeigneter Anordnung des Vorsprungs an dem Elektronikgehäuse möglich, trotz Ausbildung mehrerer, derselben Achse des Kraftfahrzeugs zugeordneten Elektronikbaueinheiten als Gleichteile, die an die jeweilige Elektronikbaueinheit angeschlossene Leitung stets aus derselben Richtung, vorzugsweise aus Richtung des Untergrunds des Kraftfahrzeugs, mit der Steckverbindungseinrichtung zu verbinden. Zu diesem Zweck ist die Steckverbindungseinrichtung beispielsweise bidirektional ausgestaltet, sodass es möglich ist, die Leitung sowohl von einer Seite als auch von einer dieser Seite gegenüberliegenden anderen Seite an dem Vorsprung anzubringen. Es kann jedoch auch vorgesehen sein, dass an dem Vorsprung genau ein Steckverbinder der Steckverbindungseinrichtung vorliegt, welcher derart an dem Vorsprung angeordnet ist, dass die Leitung von der gewünschten Seite an den Vorsprung herangeführt und mit dem Steckverbinder verbunden werden kann.

Es ist vorgesehen, dass der Vorsprung im Querschnitt gesehen auf Höhe einer Drehachse des Elektromotors angeordnet ist. Darunter kann zum einen verstanden werden, dass in geodätisch vertikaler Richtung der Vorsprung derart an dem Elektronikgehäuse vorliegt, dass er in dieser Richtung mit der Drehachse des Elektromotors überlappt. Besonders bevorzugt ist jedoch vorgesehen, dass der Vorsprung in geodätisch vertikaler Richtung bezüglich der Drehachse des Elektromotors zentriert angeordnet ist. Dies hat beispielsweise zur Folge, dass mehrere Steckverbinder der Steckverbindungseinrichtung einen identischen Abstand zu der Drehachse aufweisen.

Liegen also beispielsweise mehrere derselben Achse, aber unterschiedlichen Rädern der Achse zugeordnete Einzelradantriebe vor, so fallen die Drehachsen der Elektromotoren der Einzelradantriebe bevorzugt zusammen. Die Elektronikbaueinheiten der Einzelradantriebe weisen in axialer Richtung bezüglich der Drehachsen den Vorsprung auf gegenüberliegenden Seiten auf, sind also beispielsweise um 180° gegeneinander verdreht angeordnet. Bei nebeneinander angeordneten Elektronikbaueinheiten ragt zum Beispiel ausgehend von dem jeweiligen Elektronikgehäuse einer der Vorsprünge nach links, der andere nach rechts. Die Elektronikbaueinheit eines der Einzelradantriebe verfügt nun über den ersten Steckverbinder, nicht jedoch über den zweiten Steckverbinder, während die Elektronikbaueinheit eines anderen der Einzelradantriebe den zweiten Steckverbinder, aber nicht den ersten Steckverbinder aufweist. Dies hat zur Folge, dass die Steckverbinder der Elektronikbaueinheiten dieselbe Orientierung aufweisen, beispielsweise in geodätischer Richtung nach unten, sodass also das Steckverbindungselement an beide Einzelradantriebe aus derselben Richtung an die jeweilige Elektronikbaueinheit herangeführt und an diese angeschlossen werden kann.

Eine weitere Ausgestaltung der Erfindung sieht vor, dass der Vorsprung derart ausgestaltet ist, dass er bei einem mit der Steckverbindungseinrichtung elektrisch verbundenen Steckverbindungselement über das Steckverbindungselement übersteht. Vorstehend wurde erläutert, dass die Steckverbindungseinrichtung als Steckeraufnahme oder als Stecker ausgebildet ist oder zumindest einen entsprechend ausgestalteten Steckverbinder aufweist. Liegt die Steckverbindungseinrichtung oder der Steckverbinder als Steckeraufnahme vor, so ist das Steckverbindungselement als Stecker ausgestaltet. Umgekehrt gilt, dass bei einer Ausgestaltung der Steckverbindungseinrichtung oder des Steckverbinders als Stecker das Steckverbindungselement als Steckeraufnahme ausgestaltet ist.

Der Vorsprung weist nun Abmessungen auf, welche so gewählt sind, dass der Vorsprung das Steckverbindungselement vollständig übergreift, insbesondere in einer Ebene, welche senkrecht zu einer Steckrichtung des Steckverbindungselements steht, in welcher das Steckverbindungselement mit der Steckverbindungseinrichtung verbunden wird. Bevorzugt ist die Ebene parallel zu der Drehachse des Elektromotors angeordnet oder nimmt diese in sich auf. Der Vorsprung ragt also zum Beispiel in axialer Richtung bezüglich einer Drehachse des Elektromotors über das Elektronikgehäuse über. Vorzugsweise ist der Vorsprung geodätisch gesehen über dem Steckverbindungselement angeordnet und übergreift diesen entsprechend.

Das Steckverbindungselement kann grundsätzlich auf beliebige Art und Weise mit der Steckverbindungseinrichtung und/oder dem Elektronikgehäuse, insbesondere dem Vorsprung, verbunden sein.

Beispielsweise ist das Steckverbindungselement mit der Steckverbindungseinrichtung oder dem Elektronikgehäuse beziehungsweise dem Vorsprung kraftschlüssig und/oder formschlüssig verbunden. Insbesondere ist hierzu eine Schraubverbindung vorgesehen, sodass das Steckverbindungselement zunächst durch Einstecken mit der Steckverbindungseinrichtung verbunden und anschließend durch Herstellen der Schraubverbindung an ihr befestigt wird. Diese Befestigung kann permanent oder lösbar sein.

Eine bevorzugte weitere Ausgestaltung der Erfindung sieht vor, dass der Vorsprung zwei gegenüberliegende Anschlussflächen aufweist, wobei ein erster Steckverbinder der Steckverbindungseinrichtung an einer ersten der Anschlussflächen und/oder ein zweiter Steckverbinder der Steckverbindungseinrichtung an einer zweiten der Anschlussflächen vorliegt. Die Steckverbindungseinrichtung verfügt insoweit über einen oder mehrere Steckverbinder, nämlich über den ersten Steckverbinder oder den zweiten Steckverbinder oder alternativ über den ersten Steckverbinder und den zweiten Steckverbinder. Für diese gilt das vorstehend zu der Steckverbindungseinrichtung Gesagte. Liegt also das Steckverbindungselement als Stecker vor, so sind die Steckverbinder als Steckeraufnahmen ausgebildet. Bei einer Ausgestaltung des Steckverbindungselements als Steckeraufnahme liegen die Steckverbinder als Stecker vor.

Um die vorstehend erwähnte bidirektionale Ausgestaltung der Steckverbindungseinrichtung zu erzielen, sind die beiden Steckverbinder an gegenüberliegenden Anschlussflächen des Vorsprungs angeordnet. Die beiden Steckverbinder sind dabei vorzugsweise elektrisch miteinander verbunden, sodass es unerheblich ist, ob das Steckverbindungselement mit dem ersten Steckverbinder oder dem zweiten Steckverbinder in elektrische Verbindung gebracht wird. Sowohl bei Herstellen der elektrischen Verbindung zwischen dem Steckverbindungselement und dem ersten Steckverbinder als auch bei Herstellen der elektrischen Verbindung zwischen dem Steckverbindungselement und dem zweiten Steckverbinder liegt somit stets dieselbe, insbesondere identisch gepolte, elektrische Verbindung zwischen dem Steckverbindungselement und der Steckverbindungseinrichtung beziehungsweise der Elektronikbaueinheit vor.

Weil bevorzugt stets nur einer der Steckverbinder mit dem Steckverbindungselement verbunden wird, kann der nicht benötigte Steckverbinder als Blindsteckverbinder, also beispielsweise als Blindstecker oder Blindsteckeraufnahme, ausgeführt sein. Hierzu wird vorzugsweise dieser Steckverbinder mit einem Deckel verschlossen, wobei dem Deckel eine Dichtung zugeordnet sein kann. Selbstverständlich kann es auch vorgesehen sein, jeweils ein Steckverbindungselement mit beiden Steckverbindern elektrisch zu verbinden, also eine elektrische Verbindung zu der Elektronikbaueinheit, insbesondere zwischen dem Bordnetz und der Elektronikbaueinheit, sowohl über den ersten Steckverbinder als auch den zweiten Steckverbinder herzustellen. Hierzu sind die beiden Steckverbinder elektrisch parallel geschaltet. Mit einer derartigen Ausgestaltung kann die der Elektronikbaueinheit zur Verfügung gestellte elektrische Leistung, insbesondere die während des Betriebs auftretende Stromstärke, deutlich vergrößert werden.

Beispielsweise ist der erste Steckverbinder beziehungsweise die Anschlussfläche, an welcher er vorliegt, der Karosserie des Kraftfahrzeugs beziehungsweise dem Karosserieblech zugewandt, während der zweite Steckverbinder beziehungsweise die Anschlussfläche, an welcher der zweite Steckverbinder vorliegt, der Karosserie beziehungsweise dem Karosserieblech abgewandt ist. Die Bezeichnung als erster Steckverbinder beziehungsweise als erste Anschlussfläche kann jedoch auch von der Orientierung der Elektronikbaueinheit abhängen, sodass der der Karosserie zugewandte Steckverbinder in einer ersten Orientierung als erster Steckverbinder und in einer von der ersten Orientierung verschiedenen zweiten Orientierung als zweiter Steckverbinder bezeichnet wird. Beispielsweise unterscheiden sich die beiden Orientierungen um einen Drehwinkel von 180°.

Selbstverständlich kann jedoch alternativ lediglich ein einziger der Steckverbinder vorliegen, nämlich entweder der erste Steckverbinder oder der zweite Steckverbinder. In diesem Fall kann es beispielsweise vorgesehen sein, dass derjenige Steckverbinder an dem Vorsprung angeordnet wird, welcher die gewünschte Ausrichtung aufweist. Bevorzugt werden nach Art eines Baukastensystems wenigstens zwei Elektronikbaueinheiten vorgehalten, die sich lediglich hinsichtlich der Ausgestaltung der Steckverbindungseinrichtung unterscheiden, also hinsichtlich des Vorhandenseins entweder des ersten Steckverbinders oder des zweiten Steckverbinders. Werden nun unterschiedlich orientierte Einzelradantriebe realisiert, so werden aus den Elektronikbaueinheiten diejenigen ausgewählt und den Einzelradantrieben zugeordnet, die für die Einzelradantriebe dieselbe Ausrichtung des Steckverbinders aufweisen. An einem ersten der Einzelradantriebe wird insoweit zum Beispiel eine Elektronikbaueinheit mit dem ersten Steckverbinder und an einem zweiten der Einzelradantriebe eine Elektronikbaueinheit mit dem zweiten Steckverbinder verbaut.

Zur Bereitstellung der Elektronikbaueinheiten werden diese vorzugsweise zunächst identisch ausgestaltet, insbesondere werden identische Elektronikgehäuse bereitgestellt, die jeweils den Vorsprung bereits aufweisen. Aus diesem Grund kann für beide Elektronikbaueinheiten dasselbe Fertigungswerkzeug verwendet werden. Vorzugsweise ist der Vorsprung einstückig und/oder materialeinheitlich mit dem Rest des Elektronikgehäuses ausgeführt.

Anschließend wird für jede der Elektronikbaueinheiten eine Aufnahmeöffnung für den jeweilige Steckverbinder in dem Vorsprung ausgebildet. Dies kann zum Beispiel durch Bohren, Schneiden oder Stanzen erfolgen. Dabei wird für eine erste der Elektronikbaueinheiten die Aufnahmeöffnung in die erste der Anschlussflächen und für eine zweite der Elektronikbaueinheiten in die zweite der Anschlussflächen eingebracht. Die jeweils andere Anschlussfläche verbleibt unbearbeitet. Anschließend wird in die Aufnahmeöffnung der ersten Elektronikbaueinheit und in die Aufnahmeöffnung der zweiten Elektronikbaueinheit der jeweilige Steckverbinder eingebracht und dort befestigt.

Besonders vorteilhaft ist es, wenn für die Elektronikbaueinheiten abgesehen von den Steckverbindern derselbe Aufbau, insbesondere hinsichtlich von Elektronikkomponenten, vorliegt. Entsprechend unterscheiden sich die fertigen Elektronikbaueinheiten ausschließlich hinsichtlich der Anordnung des Steckverbinders an dem Vorsprung.

Zusammengefasst ergeben sich wenigstens drei Konfigurationen, die nochmals beispielhaft zusammengefasst werden: Zum einen können mehrere Steckverbinder an dem Vorsprung vorliegen, wobei mehrere dieser Steckverbinder mit jeweils einem Steckverbindungselement elektrisch verbunden werden. Alternativ können zwar mehrere Steckverbinder vorgesehen sein, zumindest einer davon jedoch als Blindsteckverbinder ausgeführt sein. Auch ist es möglich nicht an allen der Anschlussflächen, sondern lediglich an zumindest einer der Anschlussflächen, bevorzugt nur an einer der Anschlussflächen, einen Steckverbinder anzuordnen. In den letztgenannten beiden Fällen wird bevorzugt lediglich ein Steckverbindungselement zur Herstellung der elektrischen Verbindung zu der Elektronikbaueinheit, insbesondere zwischen dem Bordnetz und der Elektronikbaueinheit, verwendet.

Eine bevorzugte Ausgestaltung der Erfindung sieht vor, dass die Anschlussflächen zueinander parallel ausgerichtet sind. Vorzugsweise werden die gegenüberliegenden Anschlussflächen jeweils von einer Ebene definiert beziehungsweise liegen in dieser Ebene. Die Anschlussflächen beziehungsweise diese Ebenen liegen nun parallel, jedoch beabstandet voneinander, vor. Beispielweise weisen beide Ebenen und insoweit beide Anschlussflächen nach der Montage des Einzelradantriebs denselben Abstand zu der Drehachse des Elektromotors auf.

Eine Weiterbildung der Erfindung sieht vor, dass der Abstand zwischen den Anschlussflächen in Normalenrichtung zu den Anschlussflächen bezogen auf die Abmessungen des Elektronikgehäuses in die Normalenrichtung höchstens 90 %, höchstens 80 %, höchstens 75 %, höchstens 70 %, höchstens 60 %, höchstens 50 %, höchstens 40 %, höchstens 30 %, höchstens 25 %, höchstens 20 % oder höchstens 10 % beträgt. Wie bereits erläutert, werden die Anschlussflächen jeweils von einer Ebene definiert. Die Normalenrichtung steht senkrecht auf wenigstens einer dieser Ebenen, bevorzugt auf beiden Ebenen. In dieser Richtung weisen die Anschlussflächen einen Abstand voneinander auf, der bezogen auf die Abmessungen, insbesondere die maximalen Abmessungen, des Elektronikgehäuses in dieser Richtung einen der genannten Werte aufweist. Das bedeutet, dass der Vorsprung in dieser Richtung vorzugsweise kleiner ist als das Elektronikgehäuse, insbesondere deutlich kleiner.

Eine bevorzugte Weiterbildung der Erfindung sieht vor, dass der Vorsprung von gegenüberliegenden Seitenflächen des Elektronikgehäuses beabstandet angeordnet ist. Die Seitenflächen begrenzen das Elektronikgehäuse in die vorstehend bereits erwähnte Normalenrichtung, bevorzugt in geodätisch vertikaler Richtung. Beispielsweise sind die Seitenflächen die Stellen des Elektronikgehäuses, welche an den am weitesten von dem Vorsprung entfernten Stellen des Elektronikgehäuses in der Normalenrichtung gebildet sind. Der Vorsprung soll nun von beiden Seitenflächen beabstandet vorliegen.

Dies hat den Vorteil, dass bei dem Herstellen der elektrischen Verbindung zwischen dem Steckverbindungselement und der Steckverbindungseinrichtung unabhängig davon, mit welchem Steckverbinder das Steckverbindungselement zusammenwirkt, das Steckverbindungselement und/oder die sich an das Steckverbindungselement anschließende Leitungen zumindest abschnittsweise parallel zu einer Wandung des Elektronikgehäuses verlaufen, über die der Vorsprung bevorzugt übersteht. Mithin ist eine geschützte Anordnung des Steckverbindungselements und/oder der Leitung realisiert.

Besonders bevorzugt kann es dabei vorgesehen sein, dass der Vorsprung mittig zwischen den Seitenflächen angeordnet ist. Insgesamt ist also der Vorsprung in zumindest einer Richtung, nämlich der Normalenrichtung, mittig an dem Elektronikgehäuse vorgesehen. Das bedeutet, dass er von den vorstehend erwähnten Seitenflächen jeweils denselben Abstand hat. Auf diese Art und Weise kann, insbesondere zusammen mit der bidirektionalen Steckverbindungseinrichtung, eine Ausgestaltung von mehreren Elektronikbaueinheiten als Gleichteile realisiert werden. Diese können beispielsweise um einen Drehwinkel von 180° gegeneinander verdreht sein und dennoch eine Montage des Steckverbindungselements an der Steckverbindungseinrichtung beziehungsweise den Steckverbindern aus jeweils derselben Richtung, beispielsweise von unten, ermöglichen.

Die Erfindung betrifft weiterhin ein Kraftfahrzeug mit einer Achse, der mehrere Einzelradantriebe zum Antreiben von Rädern der Achse zugeordnet sind, wobei jeder Einzelradantrieb einen Elektromotor und eine Elektronikbaueinheit, insbesondere gemäß den vorstehenden Ausführungen, aufweist, wobei die Elektronikbaueinheit über ein an einem Motorgehäuse des Elektromotors befestigtes Elektronikgehäuse sowie eine elektrische Steckverbindungseinrichtung zur Herstellung einer lösbaren elektrischen Verbindung verfügt. Dabei ist vorgesehen, dass die Steckverbindungseinrichtung an einem von dem Elektronikgehäuse ausgehenden Vorsprung angeordnet ist, der im Querschnitt gesehen auf Höhe einer Drehachse des Elektromotors angeordnet ist.

Auch hier sei nochmals auf die bereits erläuterten Vorteile einer solchen Ausgestaltung des Kraftfahrzeugs, des Einzelradantriebs beziehungsweise der Elektronikbaueinheit verwiesen. Selbstverständlich können das Kraftfahrzeug, der Einzelradantrieb sowie die Elektronikbaueinheit gemäß den vorstehenden Ausführungen weitergebildet sein, sodass erneut auf diese verwiesen wird.

Besonders bevorzugt ist in einer weiteren Ausgestaltung der Erfindung vorgesehen, dass die Elektronikbaueinheiten der Einzelradantriebe als Gleichteile ausgeführt sind. Das bedeutet, dass die Elektronikbaueinheiten identisch ausgestaltet sind und lediglich in unterschiedlicher Orientierung angeordnet werden beziehungsweise werden können. Beispielsweise werden die Elektronikbaueinheiten der mehreren Einzelradantriebe derart ausgerichtet, dass die Vorsprünge in entgegengesetzte Richtungen zeigen, also beispielsweise in seitlicher Richtung nach außen. Unter der seitlichen Richtung ist dabei eine Richtung zu verstehen, welche parallel zu einem Untergrund des Kraftfahrzeugs verläuft und senkrecht auf einer Längsachse des Kraftfahrzeugs beziehungsweise der Vorwärtsfahrrichtung des Kraftfahrzeugs steht.

Anders ausgedrückt sind die Vorsprünge in axialer Richtung bezüglich der Drehachsen der Elektromotoren auf gegenüberliegenden, voneinander abgewandten Seiten der Elektronikgehäuse angeordnet. Dabei werden bevorzugt zumindest die Elektronikgehäuse mit den Vorsprüngen zunächst als Gleichteile hergestellt. Anschließend können der erste Steckverbinder, der zweite Steckverbinder oder beide Steckverbinder an dem Vorsprung montiert werden, insbesondere in der jeweils entsprechend realisierten Aufnahmeöffnung.

Bei der vorstehend bereits erläuterten bidirektionalen Ausgestaltung der Steckverbindungseinrichtung ist es nunmehr möglich, das Steckverbindungselement stets - geodätisch gesehen - von unten an die Steckverbindungseinrichtung heranzuführen. Das ist auch möglich, wenn an einem der Vorsprünge der erste Steckverbinder und an einem anderen der Vorsprünge der zweite Steckverbinder vorliegt. Dies hat den Vorteil, dass jederzeit ohne weiteres Zugriff auf die Steckverbindungseinrichtung, das Steckverbindungselement sowie die dazugehörige Leitung möglich ist. Um die elektrische Verbindung zu lösen ist es also nicht notwendig, zunächst die Elektronikbaueinheit von dem Motorgehäuse zu entfernen beziehungsweise den Einzelradantrieb zu demontieren.

Die Erfindung wird nachfolgend anhand der in der Zeichnung dargestellten Ausführungsbeispiele näher erläutert, ohne dass eine Beschränkung der Erfindung erfolgt. Dabei zeigt:
- Figur 1: eine schematische Querschnittsdarstellung durch einen Bereich eines Kraftfahrzeugs,
- Figur 2: eine Seitenansicht des Bereichs des Kraftfahrzeugs, und
- Figur 3: eine Detailansicht mehrerer Einzelradantriebe.

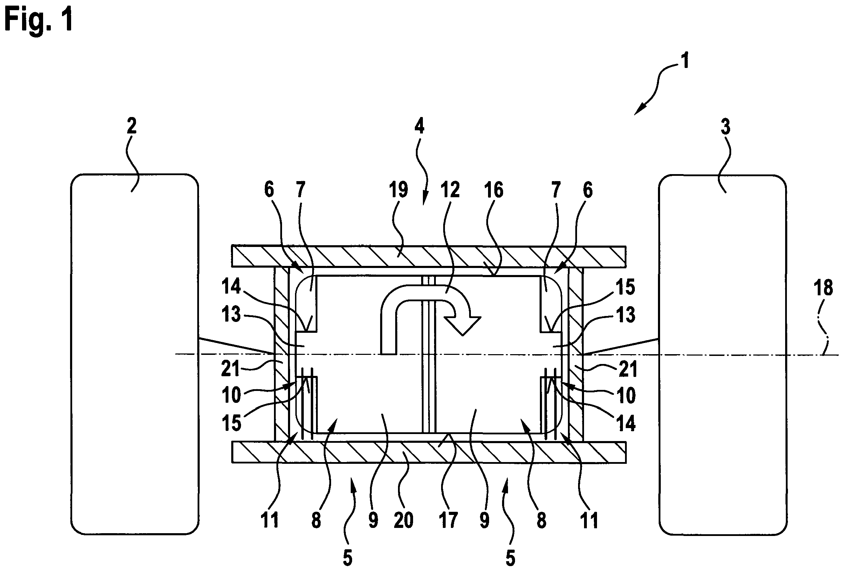

Die Figur 1 zeigt eine Querschnittsdarstellung durch einen Bereich eines Kraftfahrzeugs 1. Dargestellt sind Räder 2 und 3 einer elektrisch angetriebenen Achse 4. Jedem Rad 2 und 3 ist ein Einzelradantrieb 5 zugeordnet. Jeder Einzelradantrieb 5 verfügt über einen Elektromotor 6 mit einem Motorgehäuse 7. An dem Motorgehäuse 7 ist eine Elektronikbaueinheit 8, insbesondere ein Elektronikgehäuse 9 der Elektronikbaueinheit 8, befestigt. Jede Elektronikbaueinheit 8 verfügt über eine elektrische Steckverbindungseinrichtung 10, die zur Herstellung einer lösbaren elektrischen Verbindung mit einem Steckverbindungselement 11 dient.

Zumindest der Elektronikbaueinheiten 8, bevorzugt jedoch die Einzelradantriebe 5, sind als Gleichteile ausgestaltet. Das bedeutet, dass identische Elektronikbaueinheiten 8 beziehungsweise Einzelradantriebe 5 den Rädern 2 und 3 zugeordnet werden können. Dies ist durch den Pfeil 12 angedeutet. Der dem Rad 2 zugeordnete Einzelradantrieb 5 kann insoweit durch eine einfache Drehung um 180° in den dem Rad 3 zugeordneten Einzelradantrieb 5 überführt werden.

Dies wird insbesondere dadurch erzielt, dass die Steckverbindungseinrichtung 10 an einer von dem Elektronikgehäuse 9 ausgehenden Vorsprung 13 angeordnet ist. Bevorzugt sind dabei die Steckverbindungseinrichtungen 10 bidirektional ausgestaltet, sodass die Steckverbindungselemente 11 stets - geodätisch gesehen - von unten an der Steckverbindungseinrichtung 10 angebracht werden können. Dies wird beispielsweise erzielt, indem der Vorsprung 13 zwei gegenüberliegende Anschlussflächen 14 und 15 aufweist. An der Anschlussfläche 14 ist nun ein erster Steckverbinder vorgesehen, während an der Anschlussfläche 15 ein zweiter Steckverbinder vorliegt. Diese sind elektrisch identisch beschaltet, sodass dieselbe elektrische Verbindung zwischen dem Steckverbindungselement 11 und der Elektronikbaueinheit 8 sowohl durch Anbringen des Steckverbindungselements 11 an dem ersten Steckverbinder als auch durch Anbringen an dem zweiten Steckverbinder hergestellt werden kann.

Es kann jedoch auch vorgesehen sein, dass nur stets an derjenigen Anschlussfläche 14 beziehungsweise 15 der Vorsprünge 13 der jeweilige Steckverbinder angeordnet wird, die eine entsprechende Orientierung aufweist, beispielsweise geodätisch unterhalb der jeweils anderen Anschlussfläche 15 beziehungsweise 14 liegt.

Bevorzugt ist es vorgesehen, dass die Anschlussflächen 14 und 15 parallel zueinander verlaufen. Bei dem hier dargestellten Ausführungsbeispiel weist der Vorsprung 13 in Normalenrichtung der Anschlussflächen 14 und 15 Abmessungen auf, welche höchstens 25 % der Abmessungen des Elektronikgehäuses 9 in dieselbe Richtung betragen. Gleichzeitig ist der Vorsprung mittig zwischen zwei Seitenflächen 16 und 17 des Elektronikgehäuses 9 angeordnet, welche das Elektronikgehäuse 9 in die vorstehend erwähnte Normalenrichtung begrenzen.

Besonders bevorzugt liegt der Vorsprung 13 im Querschnitt gesehen auf Höhe einer Drehachse 18 des Elektromotors 6, beispielsweise ist der Vorsprung 13 bezüglich der Drehachse 18 - im Querschnitt gesehen - zentriert. Die Drehachse 18 verläuft also durch den Vorsprung 13 beziehungsweise schneidet ihn mittig. Bei einer derartigen Ausgestaltung ist das Steckverbindungselement 11 stets ohne weiteres aus derselben Richtung anbringbar, unabhängig davon, in welcher Orientierung der Elektronikbaueinheit 8 an dem Motorgehäuse 7 angebracht ist. Zudem ist das Steckverbindungselement 11 und/oder eine von diesem ausgehende Leitung, stets zumindest bereichsweise neben dem Elektronikgehäuse 9 und/oder neben dem Motorgehäuse 7 angeordnet, sodass ein gewisser Schutz vor mechanischen Beeinträchtigungen gegeben ist.

Es wird deutlich, dass die Einzelradantriebe 5 ohne weiteres zwischen Bauraumgrenzen 19, 20 und 21 anordenbar sind. Die Bauraumgrenze 19 wird durch eine Karosserie des Kraftfahrzeugs 1, insbesondere durch ein Karosserieblech, definiert. Die Bauraumgrenze 20 dagegen wird von einem Untergrund beziehungsweise Boden definiert, auf welchem sich das Kraftfahrzeug 1 bewegt. Die Bauraumgrenzen 21 werden von den Rädern 2 und 3 vorgegeben.

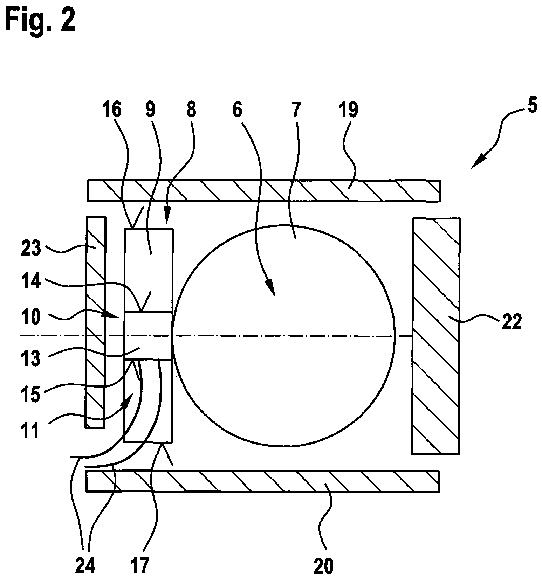

Die Figur 2 zeigt eine Seitendarstellung des Einzelradantriebs 5. Neben den Bauraumgrenzen 19 und 20 sind nun Bauraumgrenzen 22 und 23 dargestellt, welche beispielsweise in Abhängigkeit von der Achse 4 festgelegt werden. Beispielsweise sind die Bauraumgrenzen 22 und 23 ebenfalls von der Karosserie des Kraftfahrzeugs 1 definiert. Obwohl von dem Steckverbindungselement 11 ausgehende Leitungen 24 mit einem Mindestkrümmungsradius verlegt werden müssen, ist die Anordnung der Leitungen 24 bedingt durch die spezielle Anordnung des Vorsprungs 13 an dem Elektronikgehäuse 9 ohne weiteres möglich.

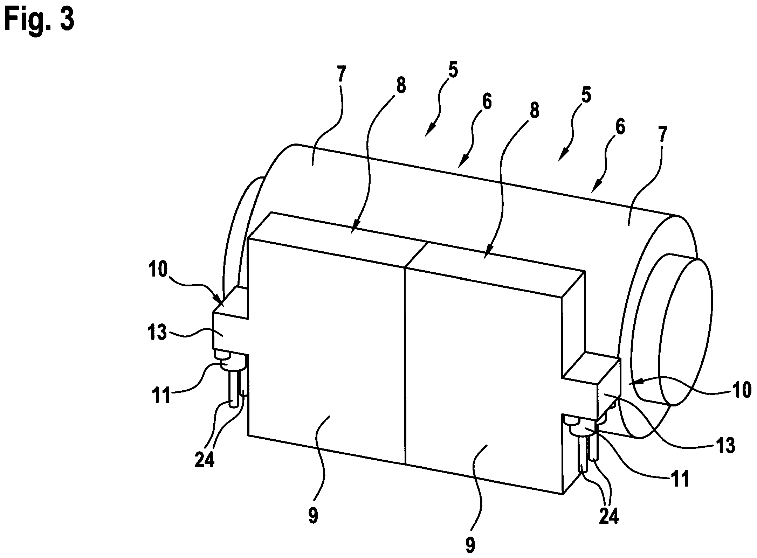

Die Figur 3 zeigt eine weitere Darstellung von zwei Einzelradantrieben 5, welche gemäß den vorstehenden Ausführungen jeweils über den Elektromotor 6 und die Elektronikbaueinheit 8 verfügen. Deutlich ist hier nochmals die mittige Anordnung des Vorsprungs 13 und die sich daraus ergebende Montagesituation der Steckverbindungselemente 11 zu erkennen.

## Patentansprüche

1. Einzelradantrieb (5) zum Antreiben eines einer Achse (4) eines Kraftfahrzeugs (1) zugeordneten Rads (2,3), mit einem Elektromotor (6) und einer Elektronikbaueinheit (8), die über ein an einem Motorgehäuse (7) des Elektromotors (6) befestigtes Elektronikgehäuse (9) sowie eine elektrische Steckverbindungseinrichtung (10) zur Herstellung einer lösbaren elektrischen Verbindung verfügt, wobei die Steckverbindungseinrichtung (10) an einem von dem Elektronikgehäuse (9) ausgehenden Vorsprung (13) angeordnet ist, wobei der Vorsprung (13) im Querschnitt gesehen auf Höhe einer Drehachse (18) des Elektromotors (6) angeordnet ist und in axialer Richtung bezüglich der Drehachse (18) über das Elektronikgehäuse (9) übersteht, wobei der Vorsprung (13) derart ausgestaltet ist, dass er bei einem mit der Steckverbindungseinrichtung (10) elektrisch verbundenen Steckverbindungselement (11) über das Steckverbindungselement (11) in einer Ebene übersteht, die senkrecht zu einer Steckrichtung des Steckverbindungselements (11) steht, in der das Steckverbindungselement (11) mit der Steckverbindungseinrichtung (10) verbunden wird, und die Drehachse (18) aufnimmt.

2. Einzelradantrieb nach Anspruch 1, wobei der Vorsprung (13) zwei gegenüberliegende Anschlussflächen (14,15) aufweist, wobei ein erster Steckverbinder der Steckverbindungseinrichtung (10) an einer ersten der Anschlussflächen (14) und/oder ein zweiter Steckverbinder der Steckverbindungseinrichtung (10) an einer zweiten der Anschlussflächen (15) vorliegt.

3. Einzelradantrieb nach einem der vorhergehenden Ansprüche, wobei die Anschlussflächen (14,15) zueinander parallel ausgerichtet sind.

4. Einzelradantrieb nach einem der vorhergehenden Ansprüche, wobei der Abstand zwischen den Anschlussflächen (14,15) in Normalenrichtung zu den Anschlussflächen (14,15) bezogen auf die Abmessungen des Elektronikgehäuses (9) in die Normalenrichtung höchstens 90 %, höchstens 80 %, höchstens 75 %, höchstens 70 %, höchstens 60 %, höchstens 50 %, höchstens 40 %, höchstens 30 %, höchstens 25 %, höchstens 20 % oder höchstens 10 % beträgt.

5. Einzelradantrieb nach einem der vorhergehenden Ansprüche, wobei der Vorsprung (13) von gegenüberliegenden Seitenflächen (16,17) des Elektronikgehäuses (9) beabstandet angeordnet ist.

6. Kraftfahrzeug (1) mit einer Achse (4), der mehrere Einzelradantriebe (5) zum Antreiben von Rädern (2,3) der Achse (4) zugeordnet sind, wobei jeder Einzelradantrieb (5) nach einem der Ansprüche 1 bis 5 ausgebildet ist.

7. Kraftfahrzeug nach Anspruch 6, wobei die Elektronikbaueinheiten (8) der Einzelradantriebe (5) als Gleichteile ausgeführt sind.

## Claims

1. Individual wheel drive (5) for driving a wheel (2, 3) assigned to an axle (4) of a motor vehicle (1), having an electric motor (6) and an electronic component (8) which has an electronic housing (9) fastened on a motor housing (7) of the electric motor (6) and an electrical plug-in connection device (10) for creating a releasable electrical connection, wherein the plug-in connection device (10) is disposed on a protrusion (13) protruding from the electronic housing (9), wherein the protrusion (13) viewed in cross-section is disposed on the level of a rotational axis (18) of the electric motor (6) and protrudes in axial direction with respect to the rotational axis (18) beyond the electronic housing (9), wherein the protrusion (13) is designed such that, when a plug-in connection element (11) is electrically connected with the plug-in connection device (10), it protrudes beyond the plug-in connection element (11) in a plane, which stands perpendicularly to a plug-in direction of the plug-in connection element (11), in which the plug-in connection element (11) is connected with the plug-in connection device (10), and includes the rotational axis (18).

2. Individual wheel drive according to claim 1, wherein the protrusion (13) has two oppositely-situated connection faces (14, 15), wherein a first plug-in connector of the plug-in connection device (10) is present on a first of the connection faces (14) and/or a second plug-in connector of the plug-in connection device (10) is present on a second of the connection faces (15).

3. Individual wheel drive according to any of the preceding claims wherein the connection faces (14, 15) are aligned parallel to one another.

4. Individual wheel drive according to any of the preceding claims, wherein the distance between the connection faces (14, 15) in normal direction to the connection faces (14, 15) relating to the dimensions of the electronic housing (9) is in the normal direction maximum 90%, maximum 80%, maximum 75%, maximum 70%, maximum 60%, maximum 50%, maximum 40%, maximum 30%, maximum 25%, maximum 20% or maximum 10%.

5. Individual wheel drive according to any of the preceding claims, wherein the protrusion (13) is disposed at a distance from oppositely-situated side surfaces (16, 17) of the electronic housing (9).

6. Motor vehicle (1) having an axle (4) to which several individual wheel drives (5) are assigned for driving wheels (2, 3) of the axle (4), wherein each individual wheel drive (5) is designed according to any of claims 1 to 5.

7. Motor vehicle according to claim 6, wherein the electronic components (8) of the individual wheel drives (5) are in the form of identical parts.

## Revendications

1. Entraînement de roue individuelle (5) destiné à entraîner une roue (2,3) associée à un essieu (4) d'un véhicule automobile (1), avec un moteur électrique (6) et une unité modulaire électronique (8), qui dispose d'un boîtier électronique (9) fixé sur un boîtier de moteur (7) du moteur électrique (6) ainsi qu'un dispositif de connexion (10) électrique destiné à établir une liaison électrique libérable, dans lequel le dispositif de connexion (10) est disposé sur une partie saillante (13) sortant du boîtier électronique (9), dans lequel la partie saillante (13) est disposée, vue en coupe transversale, à hauteur d'un axe de rotation (18) du moteur électrique (6) et fait saillie du boîtier électronique (9) dans la direction axiale par rapport à l'axe de rotation (18), dans lequel la partie saillante (13) est conçue de telle sorte que, lorsqu'un élément de connexion (11) est relié électriquement au dispositif de connexion (10), elle fait saillie de l'élément de connexion (11) dans un plan qui est perpendiculaire à une direction d'enfichage de l'élément de connexion (11), dans laquelle l'élément de connexion (11) est relié au dispositif de connexion (10), et loge l'axe de rotation (18).

2. Entraînement de roue individuelle selon la revendication 1, dans lequel la partie saillante (13) présente deux surfaces de raccordement (14, 15) opposées, dans lequel un premier connecteur du dispositif de connexion (10) est présent sur une première des surfaces de raccordement (14) et/ou un second connecteur du dispositif de connexion (10) est présent sur une seconde des surfaces de raccordement (15).

3. Entraînement de roue individuelle selon l'une quelconque des revendications précédentes, dans lequel les surfaces de raccordement (14, 15) sont orientées parallèlement l'une à l'autre.

4. Entraînement de roue individuelle selon l'une quelconque des revendications précédentes, dans lequel l'écart entre les surfaces de raccordement (14, 15) dans la direction normale par rapport aux surfaces de raccordement (14, 15), rapporté aux dimensions du boîtier électronique (9) dans la direction normale, atteint au maximum 90 %, au maximum 80 %, au maximum 75 %, au maximum 70 %, au maximum 60 %, au maximum 50 %, au maximum 40 %, au maximum 30 %, au maximum 25 %, au maximum 20 % ou au maximum 10 %.

5. Entraînement de roue individuelle selon l'une quelconque des revendications précédentes, dans lequel la partie saillante (13) est disposée à distance des surfaces latérales (16, 17) opposées du boîtier électronique (9).

6. Véhicule automobile (1) avec un essieu (4) auquel sont associés plusieurs entraînements de roue individuelle (5) destinés à entraîner des roues (2, 3) de l'essieu (4), dans lequel chaque entraînement de roue individuelle (5) est réalisé selon l'une quelconque des revendications 1 à 5.

7. Véhicule automobile selon la revendication 6, dans lequel les unités modulaires électroniques (8) des entraînements de roue individuelle (5) sont réalisées en tant que pièces identiques.
